# EUROPÄISCHE PATENTSCHRIFT

(11) **EP 2 649 709 B1**
(45) Veröffentlichungstag und Bekanntmachung des Hinweises auf die Patenterteilung: **13.09.2017**
(21) Anmeldenummer: 11805407.1
(22) Anmeldetag: 08.12.2011
(51) Int. Cl.: B62D 5/00, H02K 7/116, H02K 11/215

(54) **HANDMOMENTENSTELLER**
MANUAL TORQUE ADJUSTER
ACTIONNEUR DE COUPLE RESSENTI AU VOLANT

(30) Priorität: 10.12.2010 DE 102010054135
(43) Veröffentlichungstag der Anmeldung: 16.10.2013
(73) Patentinhaber: ThyssenKrupp Presta AG, 9492 Eschen (LI)
(72) Erfinder: SCHOLTEN, Michael, A-6723 Blons (AT); GALEHR, Robert, FL-9493 Mauren (LI)
(74) Vertreter: Lenzing Gerber Stute
(86) Internationale Anmeldenummer: PCT/EP2011/006180
(87) Internationale Veröffentlichungsnummer: WO 2012/076175

(56) Entgegenhaltungen:
- EP-A2- 1 342 639
- EP-A2- 1 493 649
- EP-A2- 1 772 947
- US-A1- 2003 188 918

## Beschreibung

Die vorliegende Erfindung betrifft einen Handmomentensteller mit den Merkmalen des Oberbegriffs des Anspruchs 1.

Bei Kraftfahrzeugen ist es bekannt, Lenkungen ohne unmittelbare mechanische Kopplung zwischen dem Lenkrad und dem Lenkgetriebe einzusetzen. Solche Lenkungen werden als steer-by-wire-Lenkungen (sbw-Lenkungen) bezeichnet. Bei diesen Lenkungen ist es erforderlich, dem Fahrer über das Lenkrad Momente zu übermitteln, die dem Fahrgefühl einer konventionellen Lenkung entsprechen. Diese Momente sind zum Beispiel Trägheitsmomente, Rückstellmomente oder auch Rückwirkungsmomente, die aus Fahrbahneinflüssen und der Lenkkinematik herrühren. Ohne diese am Lenkrad spürbaren Momente ist ein sicheres Führen des Kraftfahrzeugs durch den Fahrer erschwert.

Handmomentensteller gibt es in verschiedenen Ausführungen. Bei solchen Aktuatoren ist es aus der Patentschrift US 6,820,713 B2 bekannt, einen in Axialrichtung der oberen, mit dem Lenkrad verbundenen Lenkwelle besonders kompakt zu gestalten, in dem der erforderliche Elektromotor achsparallel neben der Lenkwelle angeordnet ist und über einen Riementrieb mit der Lenkwelle gekoppelt ist. Der Elektromotor überragt die Länge der Lenkwelle nicht.

Wesentlich für die Akzeptanz solcher Lenksysteme ist eine sehr präzise Regelung des Elektromotors, der das Handmoment erzeugt. Für eine solche Regelung ist es erforderlich, den Elektromotor mit einem Motorpositionssensor zu versehen, der die aktuelle Position und gegebenenfalls auch die Drehwinkelgeschwindigkeit und- Richtung des Rotors anzeigt. Aus der EP 1 493 649 A2 und der EP 1 342 639 A2 sind Elektromotoren zur Erzeugung eines Drehmoments bekannt, die über einen Riemenantrieb auf eine Welle wirken, wobei jeweils eine Sensoreinheit zur Erfassung der Motorposition vorgesehen ist. Die Sensoreinheit sitzt bei bekannten Handmomentenstellern an dem freien Ende der Motorwelle, das der Abtriebsseite gegenüber liegt. Die zugehörige Elektronik wird im allgemeinen ebenfalls an der der Abtriebsseite des Elektromotors abgewandten Seite angeordnet. Hierdurch verlängert sich der Aufbau des Elektromotors in Axialrichtung, was bei besonders kompakten Anordnungen unerwünscht ist. Insbesondere wird durch die Anordnung des Motorpositionssensors auch die Position der elektronischen Steuerung (ECU) des Handmomentenstellers innerhalb eines engen Rahmens vorgegeben, da man bestrebt ist, die elektrischen Leitungen zwischen dem Sensor und der ECU kurz zu halten.

Ausgehend von diesem Stand der Technik ist es Aufgabe der vorliegenden Erfindung, einen Handmomentensteller für eine sbw-Lenkung zur Verfügung zu stellen, der in Axialrichtung besonders kurz baut.

Diese Aufgabe wird von einem Handmomentensteller mit den Merkmalen des Anspruchs 1 gelöst.

Weil der Motorpositionssensor an dem abtriebsseitigen Wellenstumpf angeordnet ist, kann der Elektromotor mit seinem Motorgehäuse an der der Abtriebsseite gegenüber liegenden Seite unmittelbar mit dem Lager der Motorwelle abschließen. An der Abtriebsseite oder Getriebeseite des Elektromotors ist durch die notwendigen mechanischen Kraftübertragungselemente ein Bedarf an Bauraum vorgegeben, der durch die mechanischen Komponenten nicht vollständig ausgenutzt wird. Wenn in diesem Bereich der Motorpositionssensor angeordnet wird, so wird dieser Teil des Bauraums effektiver genutzt. Weil weiter an dem ritzelseitigen Lagerschild des Elektromotors ein Montagebock befestigt ist, der das freie Ende der Motorwelle überragt, kann der Motorpositionssensor auf diesen Montagebock befestigt werden.

Es ist vorteilhaft, wenn die Abtriebsseite des Elektromotors mit einem Ritzel, beispielsweise einem Zahnriemenritzel, versehen ist und der Wellenstumpf der Motorwelle eine Permanentmagnetanordnung trägt, weil dann das sich im Betrieb drehende Magnetfeld einfach detektiert werden kann.

Es ist vorteilhaft, wenn der Montagebock sich innerhalb des Bereichs befindet, der von den Zahnriemen umschlungen ist. Diese Ausführung ermöglicht es, den Montagebock an dem Lagerschild zu montieren, bevor der Zahnriemen aufgelegt wird.

Es ist weiter vorteilhaft, wenn der Motorpositionssensor über elektrische Leitungen mit einer elektronischen Steuerung ECU verbunden ist, die auf der dem Motor gegenüberliegenden Seite des Zahnriementriebs angeordnet ist, weil dann der Motorpositionssensor, die elektrische Verbindung und die ECU außerhalb des Störfeldes des Elektromotors liegen. Bei einer konventionellen Anordnung des Motorpositionssensors auf dem gegenüberliegenden Wellenstumpf würde eine Positionierung der ECU im Bereich des Riementriebs oder sonst in einem Abstand von dem Elektromotor erfordern, das die Verbindungsleitungen zwischen dem Motorpositionssensor und der ECU aus dem Elektromotor heraus geführt und möglicherweise parallel zu dem Motorgehäuse geführt werden. Hierdurch würde das Signal des Motorpositionssensors in unerwünschter Weise beeinflusst.

Der Montagebock weist vorzugsweise einen Sockel auf, der an dem Lagerschild des Elektromotors befestigt ist und der sich parallel und in einem Abstand zu dem Motorritzel erstreckt, sowie einen ringförmigen Bereich, der teilweise das Motorritzel umgibt und der die Magnetanordnung auf der Stirnseite der Motorwelle außen umfasst. Auf diesem ringförmigen Bereich kann eine Positionierhilfe für den Motorpositionssensor, beispielsweise in Form von Passstiften, vorgesehen sein, die die passgenaue Montage des Sensors ermöglicht.

Schließlich ist es von Vorteil, wenn der Motor im Bereich seines abtriebsseitigen Lagerschilds mit Schrauben an einem Gehäuseteil befestigt ist, welches in diesem Bereich mit Langlöchern versehen ist. Dann kann der Motor bei der Montage so positioniert werden, dass der Zahnriemen in vorgesehener Weise gespannt wird. Dies wird im vorliegendem Fall durch die erfindungsgemäße Anordnung des Motorpositionssensors erleichtert oder überhaupt ermöglicht, weil der Motorpositionssensor an der angegebenen Montageposition über kurze Leitungen mit der ECU verbunden sein kann, die mit dem Getriebegehäuse unabhängig von dem Motor verbunden ist. Die Positionierung des Motors zur Spannung des Zahnriemens bewirkt dann zwar eine Verlagerung des Motorpositionssensors, nicht jedoch der ECU. Das Volumen der zur Riemenspannung zu bewegenden Komponenten wird dadurch minimiert. Dies reduziert den vorzuhaltenden Bauraum für den Handmomentensteller und verbessert das sogenannte packaging.

Nachfolgend wird ein Ausführungsbeispiel der vorliegenden Erfindung anhand der Zeichnung beschrieben. Es zeigen:
Figur 1: den Elektromotor und das Riemengetriebe eines Handmomentenstellers in einer perspektivischen Darstellung; sowie,
Figur 2: die Baugruppe aus Figur 1 mit aufgesetztem Motorpositionssensor.

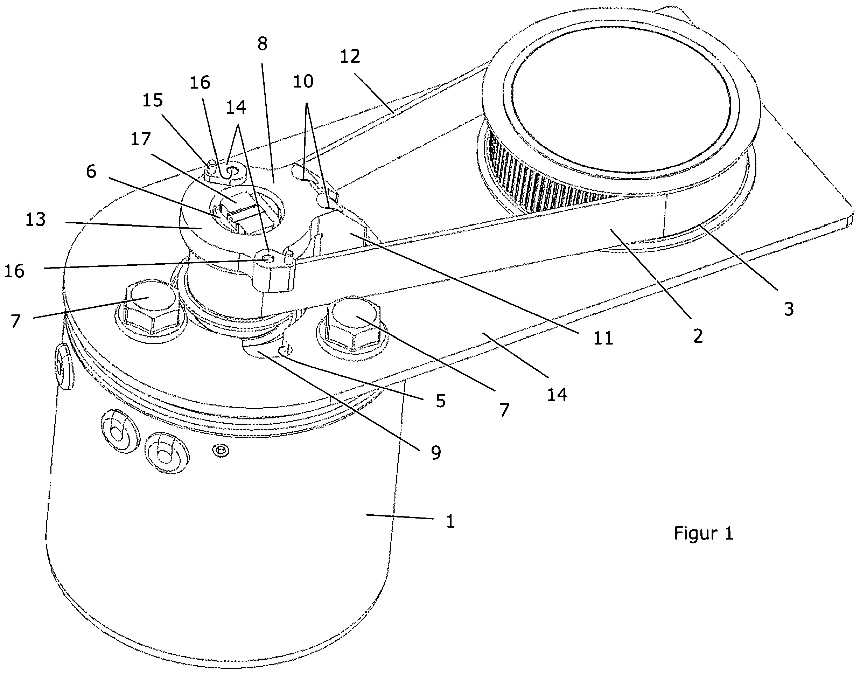

In der Figur 1 ist ein Elektromotor 1 mit einem Riementrieb, der einen Zahnriemen 2 und eine Riemenscheibe 3 umfasst, dargestellt. Die Riemenscheibe 3 dient als Antrieb einer nicht dargestellten oberen Lenkwelle einer sbw-Lenkung, die wiederum mit einem Lenkrad gekoppelt ist. Der Elektromotor 1 ist an einer Platte 4 befestigt, die Teil eines Gehäuses des Handmomentenstellers ist. Die Platte 4 weist einen Durchbruch 5 auf, der von einer Motorwelle 6 des Elektromotors 1und von dem darauf drehfest angeordneten, jedoch in der Figur 1 nicht sichtbaren Ritzel durchsetzt ist. Weiter weist die Platte 4 insgesamt 3 Langlöcher auf, durch die mittels Gewindeschrauben 7 der Motor 1 an der Platte 4 befestigt ist. Die Langlöcher ermöglichen eine Verschiebung des Motors 1 zur Spannung des Zahnriemens 2.

Der Durchbruch 5 der Platte 4 umgibt den Bereich der Lagerung der Welle 6 und erstreckt sich weiter in Richtung des Bereichs, der von dem Zahnriemen 2 umschlungen ist. In diesem Bereich, der in der Figur 1 nicht sichtbar ist, ist ein Montagebock 8 angeordnet. Der Montagebock 8 sitzt auf einem Lagerschild 9 des Elektromotors 1 und ist dort mit zwei Gewindeschrauben 10 befestigt. Bei einer Verlagerung des Elektromotors 1 zum Spannen des Zahnriemens 2 bewegt sich der Montagebock 8 mit dem Elektromotor 1 gegenüber der Platte 4. Die Zuordnung von Montagebock 8 und Motorwelle 6 bleibt beim Riemenspannen erhalten. Der Montagebock 8 weist einen parallel zu der Drehachse der Motorwelle 6 verlaufenden Sockel 11 auf, der oberhalb der Ebene die durch eine Oberkante 12 des Zahnriemens 2 definiert wird, auf die Motorwelle hin abgewinkelt ist. Der Montagebock 8 trägt dort einen ringförmigen Befestigungsbereich 13, der die Motorwelle 6 überragt und im Wesentlichen koaxial umgibt. Der Befestigungsbereich 13 trägt schließlich zwei flanschartige Auflagen 14 mit darauf angeordneten Positionierstiften 15 und Gewindebohrungen 16 zur Befestigung eines Bauelements. Die Motorwelle 6 trägt an ihrem freien Ende, das innerhalb des Befestigungsbereichs 13 liegt, eine Permanentmagnetanordnung 17 die sich im Betrieb mit der Motorwelle dreht.

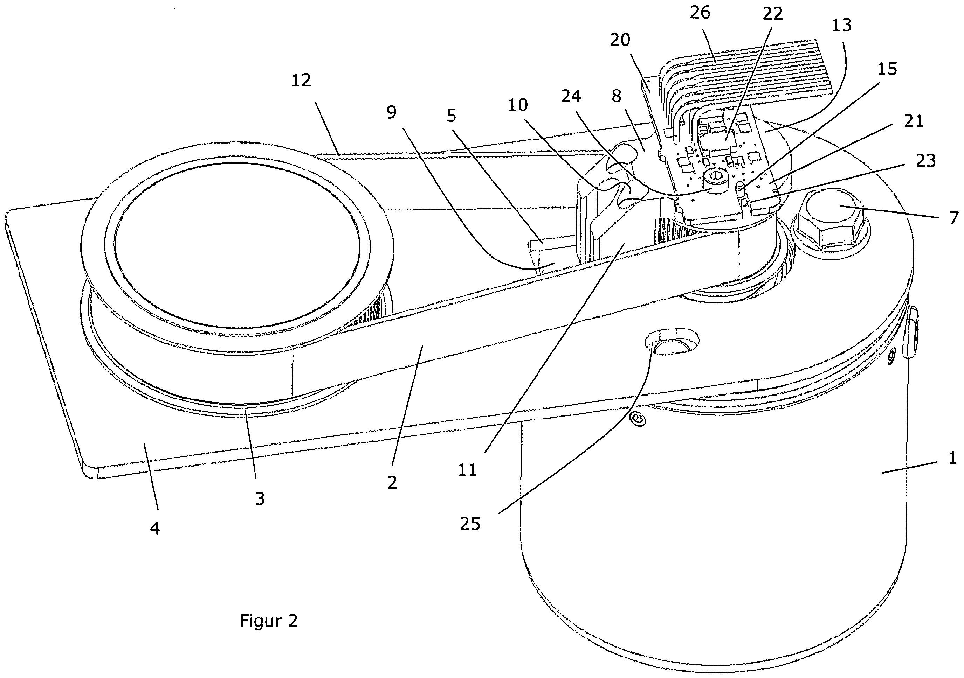

Die Figur 2 zeigt die Anordnung aus Figur 1 in einer anderen Ansicht und mit einem auf den Montagebock 8 aufgesetzten Motorpositionssensor 20. Der Motorpositionssensor 20 weist eine Grundplatte auf, auf der in bekannter Weise die erforderlichen Sensoren und elektronischen Bauteile 22 angeordnet sind. Weiter ist die Grundplatte 21 mit Schlitzen 23 versehen, die zusammen mit den Positionierstiften 15 für eine präzise Anordnung der Bauelemente 22 zu der Permanentmagnetanordnung 17 sorgt. Die Grundplatte 21 ist mit Gewindeschrauben 24 in den Gewindebohrungen 16 aus Figur 1 befestigt.

Eine der drei Befestigungsschrauben 7 für die Festlegung des Elektromotors 1 an der Platte 4 ist bei der Darstellung in Figur 2 entfernt worden, so dass ein Langloch 25, dessen Funktion bereits oben beschrieben wurde, sichtbar ist. Weiter ist in dieser Darstellung unterhalb des ringförmigen Befestigungsbereichs 13 das Motorritzel erkennbar. Schließlich zeigt diese Darstellung auch den Bereich des Durchbruchs 5, in dem der Montagebock 8 auf dem Lagerschild 9 befestigt ist, so dass bei einer Verschiebung des Elektromotors in Richtung des Langlochs 25 der Montagebock 8 gegenüber der Platte 4 mit bewegt wird.

Die Sensoreinheit 20 ist über eine Anzahl von elektrischen Leitungen 26 mit einer nicht dargestellten ECU verbunden. Diese kann zum Beispiel oberhalb des Riementriebs auf der dem Elektromotor 1 gegenüberliegenden Seite angeordnet sein, so dass sie außerhalb der Störfelder des Elektromotors 1 liegt.

Die elektrischen Leitungen 26 sind mit einem nicht dargestellten Stecker verbunden. Die Darstellung nach Figur 2 zeigt, dass durch die Anordnung des Montagebocks 8 innerhalb des von dem Zahnriemen 2 umschlungenen Bereichs bei der Montage das Auflegen des Zahnriemens 2 auf die Riemenscheibe 3 und das Motorritzel auch bei montiertem Montagebock 8 und selbst bei montierter Sensoreinheit 20 einfach möglich ist. Es ist weiter ersichtlich, dass die Sensoreinheit 20 unabhängig von dem Elektromotor 1 montiert werden kann. Folglich ist es nicht erforderlich, die Sensoreinheit 20 bereits bei der Produktion des Elektromotors 1 in den Motor zu integrieren. Es ist vielmehr möglich, einen Elektromotor ohne Sensorik einzusetzen und die Sensoreinheit 20 später im Montagevorgang anzubringen. Es können auch je nach Ausführung des Handmomentenstellers verschiedenen Sensoreinheiten 20 für verschiedenen Kraftfahrzeugmodelle eingesetzt werden, wobei der verwendete Elektromotor 1 für alle Modelle gleich sein kann. Dies verringert insgesamt die Teilevielfalt, da nur eine Art von Elektromotoren 1 verwendet wird.

Es ist aus der Figur 2 auch ersichtlich, dass die Sensoreinheit 20 in einem Abstand von dem Elektromotor 1 angeordnet ist. Der den Einfluss von Störfeldern des Elektromotors 1 auf die Sensoreinheit 20 verringert.

### Bezugszeichen

- 1.: Elektromotor
- 2.: Zahnriemen
- 3.: Riemenscheibe
- 4.: Platte
- 5.: Durchbruch
- 6.: Motorwelle
- 7.: Gewindeschrauben
- 8.: Montagebock
- 11.: Sockel
- 12.: Oberkante
- 13.: Befestigungsbereich
- 15.: Positionierstreifen
- 16.: Gewindebohrungen
- 17.: Permanentmagnetanordnung
- 20.: Sensoreinheit
- 21.: Grundplatte
- 22.: Bauteile
- 23.: Schlitze
- 24.: Gewindeschrauben
- 25.: Langloch
- 26.: elektrische Leitungen

## Patentansprüche

1. Handmomentensteller für eine Kraftfahrzeuglenkung, mit einem Elektromotor (1), der ein an seiner Abtriebsseite auf einer Motorwelle (6) angeordnetes Ritzel aufweist, welches über einen Zahnriemen (2) eine Riemenscheibe (3) antreibt, und mit einer Sensoreinheit (20), die zur Erfassung der Motorposition geeignet ist und die mit einer elektronischen Steuerung verbunden ist, die den Elektromotor (1) steuert, wobei die Sensoreinheit (20) nahe dem abtriebsseitigen Ende der Motorwelle (6) angeordnet ist **dadurch gekennzeichnet, dass** an einem ritzelseitigen Lagerschild des Elektromotors (1) ein Montagebock (8) befestigt ist, der das freie Ende der Motorwelle (6) überragt, und dass die Sensoreinheit (20) auf dem Montagebock (8) befestigt ist.

2. Handmomentensteller nach Anspruch 1, **dadurch gekennzeichnet, dass** an dem abtriebsseitigen Ende der Motorwelle (6) wenigstens ein Magnet (17) befestigt ist, dessen Magnetfeld von der Sensoreinheit (20) erfassbar ist.

3. Handmomentensteller nach einem der vorhergehenden Ansprüche, **dadurch gekennzeichnet, dass** der Montagebock (8) innerhalb eines Bereichs angeordnet ist, der von dem Zahnriemen (2) umschlungen ist.

4. Handmomentensteller nach einem der vorhergehenden Ansprüche, **dadurch gekennzeichnet, dass** die elektronischen Steuerung, die mit der Sensoreinheit (20) über elektrische Leitungen (26) verbunden ist, auf der dem Elektromotor (1) abgewandten, gegenüberliegenden Seite des Zahnriemens (2) angeordnet ist.

5. Handmomentensteller nach einem der vorhergehenden Ansprüche, **dadurch gekennzeichnet, dass** der Montagebock (8) einen Sockel (11), der an dem Lagerschild (9) des Elektromotors (1) befestigt ist und der sich parallel und in einem Abstand zu dem Motorritzel erstreckt, sowie einen ringförmigen Bereich (13) aufweist, der teilweise das Motorritzel umgibt und der die Magnetanordnung (17) auf der Stirnseite der Motorwelle (6) außen umfasst.

6. Handmomentensteller nach einem der vorhergehenden Ansprüche, **dadurch gekennzeichnet, dass** auf dem ringförmigen Bereich (13) eine Positionierhilfe (15) für die Sensoreinheit (20) vorgesehen ist.

7. Handmomentensteller nach einem der vorhergehenden Ansprüche, **dadurch gekennzeichnet, dass** der Elektromotor (1) mit seinem abtriebsseitigen Lagerschild (9) mit Schrauben (17) an einem Gehäuseteil (4) befestigt ist, welches in diesem Bereich mit Langlöchern (25) zur Riemenspannung versehen ist.

## Claims

1. Manual torque adjuster for a motor vehicle steering mechanism, having an electric motor (1) which has a pinion arranged on a motor shaft at its output end, which pinion drives a belt pulley (3) by way of a toothed belt (2), and having a sensor unit (20) which is capable of detecting the motor position and which is connected to an electronic controller that controls the electric motor (1), wherein the sensor unit (20) is arranged close to the output end of the motor shaft (6), **characterised in that** secured to a pinion-side bearing shield of the electric motor (1) is an assembly stand (8) which projects beyond the free end of the motor shaft (6), and **in that** the sensor unit (20) is secured to the assembly stand (8).

2. Manual torque adjuster according to claim 1, **characterised in that** at least one magnet (17), whose magnetic field can be detected by the sensor unit (20), is secured to the output end of the motor shaft (6).

3. Manual torque adjuster according to either of the preceding claims, **characterised in that** the assembly stand (8) is arranged inside a region around which the toothed belt (2) loops.

4. Manual torque adjuster according to any of the preceding claims, **characterised in that** the electronic controller, which is connected to the sensor unit (20) by electric lines (26), is arranged on the side of the toothed belt (2) opposing and remote from the electric motor (1).

5. Manual torque adjuster according to any of the preceding claims, **characterised in that** the assembly stand (8) has a base (11), which is secured to the bearing shield (9) of the electric motor (1) and extends parallel and at a spacing from the motor pinion, and has an annular region (13) which partially surrounds the motor pinion and which externally encompasses the magnetic arrangement (17) on the end face of the motor shaft (6).

6. Manual torque adjuster according to any of the preceding claims, **characterised in that** a positioning aid (15) for the sensor unit (20) is provided on the annular region (13).

7. Manual torque adjuster according to any of the preceding claims, **characterised in that** the electric motor (1) is secured with its output-end bearing shield (9) by screws (17) to a housing part (4) which is provided in this region with slots (25) for belt tension.

## Revendications

1. Actionneur de couple ressenti au volant pour la direction d'un véhicule à moteur, comportant un moteur électrique (1) qui présente, sur son côté sortie, un pignon monté sur un arbre du moteur (6), ce pignon entraînant une poulie (3) par l'intermédiaire d'une courroie dentée (2), ainsi qu'une unité de détection (20) apte à détecter la position du moteur et reliée à une commande électronique qui commande le moteur électrique (1), où l'unité de détection (20) est disposée à proximité de l'extrémité côté sortie de l'arbre du moteur (6), **caractérisé en ce qu'**un support de montage (8) est fixé sur le flasque (9), côté pignon, du moteur électrique (1) qui dépasse au niveau de l'extrémité libre de l'arbre du moteur (6), et que l'unité de détection (20) est fixée sur le support de montage (8).

2. Actionneur de couple ressenti au volant selon la revendication 1, **caractérisé en ce qu'**au moins un aimant est fixé sur l'extrémité côté sortie de l'arbre du moteur (6), dont le champ magnétique peut être détecté par l'unité de détection (20).

3. Actionneur de couple ressenti au volant selon l'une quelconque des revendications précédentes, **caractérisé en ce que** le support de montage (8) est agencé à l'intérieur d'un secteur qui est entouré par la courroie dentée (2).

4. Actionneur de couple ressenti au volant selon l'une quelconque des revendications précédentes, **caractérisé en ce que** la commande électronique, qui est reliée à l'unité de détection (20) par des lignes électriques (26), est agencée sur le côté opposé de la courroie dentée (2), détourné par rapport au moteur électrique (1).

5. Actionneur de couple ressenti au volant selon l'une quelconque des revendications précédentes, **caractérisé en ce que** le support de montage (8) présente un socle (11) qui est relié sur le flasque (9) du moteur électrique (1) et qui s'étend parallèlement et à une distance par rapport au pignon du moteur, ainsi qu'une zone annulaire (13) qui entoure partiellement le pignon du moteur et qui comporte à l'extérieur l'agencement d'aimants (17) sur le côté frontal de l'arbre du moteur (6).

6. Actionneur de couple ressenti au volant selon l'une quelconque des revendications précédentes, caractérisé en ce l'on prévoit un accessoire de positionnement (15) pour l'unité de détection (20) sur la zone annulaire (13).

7. Actionneur de couple ressenti au volant selon l'une quelconque des revendications précédentes, **caractérisé en ce que** le moteur électrique (1), avec son flasque (9) côté sortie, est fixé avec des vis (17) sur une partie boîtier (4) qui est pourvue, dans cette zone, de trous allongés (25) pour la tension des poulies.
